Europäisches Patentamt

(19) European Patent Office

Office européen des brevets

(11) Publication number: **0 247 004 B1**

(12) **EUROPEAN PATENT SPECIFICATION**

(45) Date of publication of patent specification:
24.04.91 Bulletin 91/17

(21) Application number: **87830010.2**

(22) Date of filing: **15.01.87**

(51) Int. Cl.⁵: **B23P 23/04**

(54) **A multifunctional machine for fitting connectors onto tubes for hydraulic systems.**

(30) Priority: **22.05.86 IT 2052386**

(43) Date of publication of application:
**25.11.87 Bulletin 87/48**

(45) Publication of the grant of the patent:
**24.04.91 Bulletin 91/17**

(84) Designated Contracting States:
**BE CH DE ES FR GB LI NL SE**

(56) References cited:
**WO-A-81/02267
CH-A- 571 924
DE-U- 1 925 818
US-A- 1 835 179
US-A- 2 675 050**

(56) References cited:
**US-A- 3 874 048
US-A- 3 917 428
US-A- 4 404 721
US-A- 4 633 621**

(73) Proprietor: **REFI AUTOMAZIONI
OLEODINAMICHE S.r.l.
Via San Francesco d'Assisi, 3
I-21040 Gerenzano (Varese) (IT)**

(72) Inventor: **Castelli, Ambrogio
Via San Francesco d'Assisi 3
I-21040 Gerenzano (Varese) (IT)**

(74) Representative: **Cicogna, Franco
Ufficio Internazionale Brevetti Dott.Prof.
Franco Cicogna Via Visconti di Modrone, 14/A
I-20122 Milano (IT)**

## Description

The present invention relates to a multifunctional machine capable of performing several different operations involved in fitting connectors onto rigid or flexible tubes to be used in hydraulic systems, such as hydraulic brake or clutch systems of motor vehicles.

Known such hydraulic systems utilise a number of rigid tubes which may be curved to shape and are fitted at each end with appropriate connectors, which latter usually take the form of a ring nut held captive on the tube by means of a stop collar fitted to each end of the tube.

Currently, to prepare a length of tube and fit it with connectors a plurality of tools or machines are needed in order to effect, in sequence, the cutting of the tube to the desired length, then external and internal deburring of the cut edge, then bending of the tube (if necessary), and finally clinching of the tube onto small collars for retention of the said connector nuts. At present, therefore, it is necessary for the operator to transfer the tube on which he is working from one machine to the other, or to pass the workpiece to successive operators each working on a particular machine. Moreover, known clinching tools of conventional type have only a single die and punch, which must be exchanged for dies and punches of a different size if tubes of different diameter are to be operated on

This known technique, obviously, involves a considerable expenditure of time, with a consequent detrimental effect on the final cost of the finished product.

US-A-4,404,721 discloses a thread cutting machine for pipes comprising a machine base are which pipe holding chucks, a pipe rotation drive mechanism, a thread cutting mechanism and a threaded coupling holding chuck mechanism adapted to hold a threaded coupling such as socket, elbow or the like in position are provided. This machine is capable of fastening the threaded coupling to the pipe after the pipe threads have been formed as well as the inherent pipe cutting off and thread cutting functions.

The object of the present invention is to eliminate the above-indicated disadvantages by providing a machine for fitting connectors onto tubes for hydraulic systems, which, in a small space, incorporates all the equipment necessary to allow all of these operations to be performed.

According to the present invention, therefore, there is provided a multifunctional machine for fitting connectors onto tubes for hydraulic systems, having the features of claim 1.

A particular advantage of the present invention is that of providing a machine for the assembly of connectors onto tubes, especially rigid tubes for hydraulic systems, which is able drastically to reduce the time usually necessary for the correct fitting of connectors to the tubes themselves.

Another advantage of the present invention is that it provides a machine for the assembly of connectors onto rigid tubes for hydraulic systems, which can be operate by only a single operator and which considerably facilitates the work thereof.

One embodiment of the present invention will now be more particularly described, by way of example, with reference to the accompanying drawings in which ;

Figure 1 is a general perspective view of the working platform of a machine according to an embodiment of the invention ;

Figure 2 is a front perspective view of a part of the machine of Figure 1, with the front casing and other parts removed to show a device for cutting tubes to a desired length ;

Figure 3 is a front perspective view of rotary tools for de-burring the ends of the tubes after cutting;

Figure 4 is a view showing the drive mechanism for the cutting device of Figure 2 and for the said de-burring tools of Figure 3 ;

Figure 5 is a front prespective view of a clinching station forming port of the embodiment of Figure 1 ;

Figure 6 is a perspective view of a clinching structure including an annular holder carrying a plurality of tools for performing clinching operations ; and

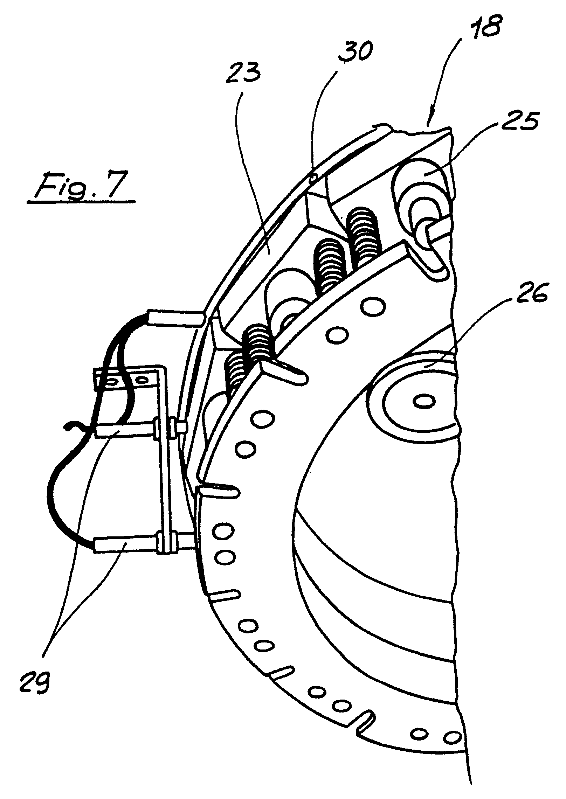

Figure 7 is a perspective view from the rear of a part of the annular holder of Figure 6, showing a device for controlling the preselected rotation of the annular holder.

With reference now to the drawings, there is shown a multifunctional machine generally indicated by the reference numeral 1, having a support frame or body 17. The machine 1 is designed for cutting and bending rigid tubes and for fitting connectors thereto as will be more particularly described below : it is to be noted, however, that the invention may also be applied to the fitting of connectors to flexible tubes although certain differences in the process would then be required.

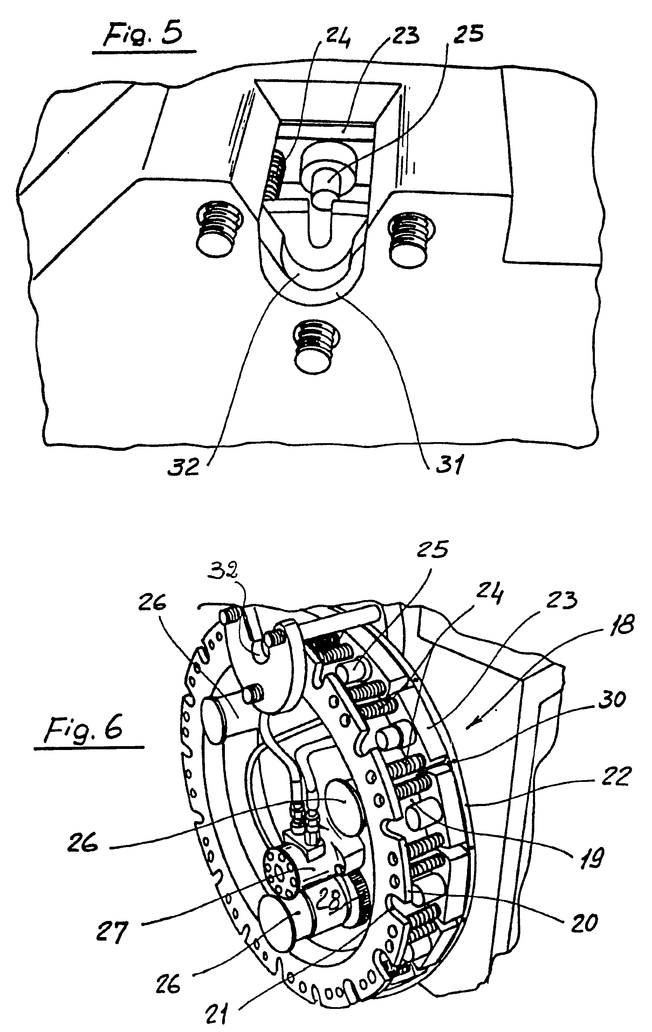

The machine illustrated comprises a cropper, generally indicated 1, which is constituted by a circular saw blade 2 mounted on a shaft 3 borne at one end of a lever arm 4 which is pivoted so as to be turnable about the axis of the drive shaft of a motor 5 (see Figure 4) carrying a pair of toothed pulleys (not shown). One of these pulleys drives a toothed belt 6, tensioned by a belt tensioner pulley 7, which belt passes over a driven pulley 8 mounted in a fixed position on the said lever arm and fitted to the shaft carrying the circular saw 2. The second of the said pulleys drives a toothed belt 9 which passes over a pulley 10a mounted on a spindle 10 carrying a de-burring tool 11 having a frusto-conical form and usable for cleaning off the burr on the inner edge of the end of a cut tube by means of longitudinal cutting discontinuities 12.

The said spindle 10 also carries a second pulley 10b over which passes a toothed belt 13 which drives a corresponding pulley 14 mounted on a second spindle 15 carrying a further de-burring tool 16. This latter is constituted by a cylindrical element provided with a coaxial cavity of frusto-conical form able to clean the outer edge of the end of a cut tube.

On one side of the support frame 17 carrying the above-described components there may also advantageously be provided tube bending apparatus (not shown) by means of which bending of the cleaned tubes to any desired radius of curvature can be effected.

The machine also includes an annular clinching structure with a horizontal axis, generally indicated with the reference numeral 18, which is constituted by a short cylinder 19 provided with a front flange 20, having a plurality of outwardly facing radial cavities 21 functioning as dies. This straight cylinder 19 is fixedly connected to a ring 22 carrying, on blocks 23, counterposed by pairs of helical springs 24, a corresponding number of punches 25 having a range of different diameters corresponding to the different sizes of the cavities in the front flange.

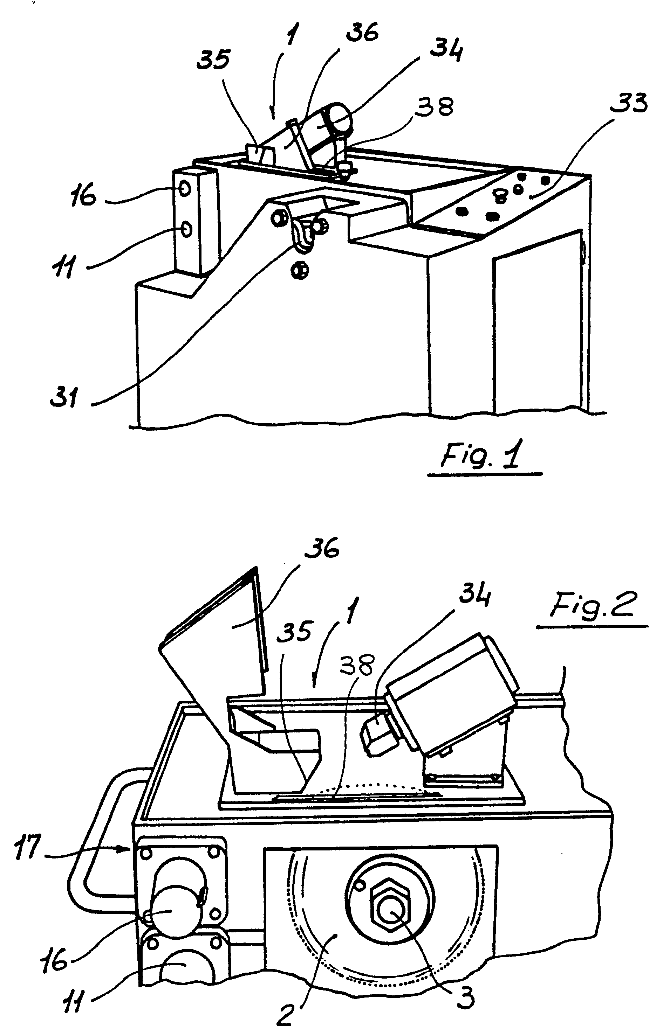

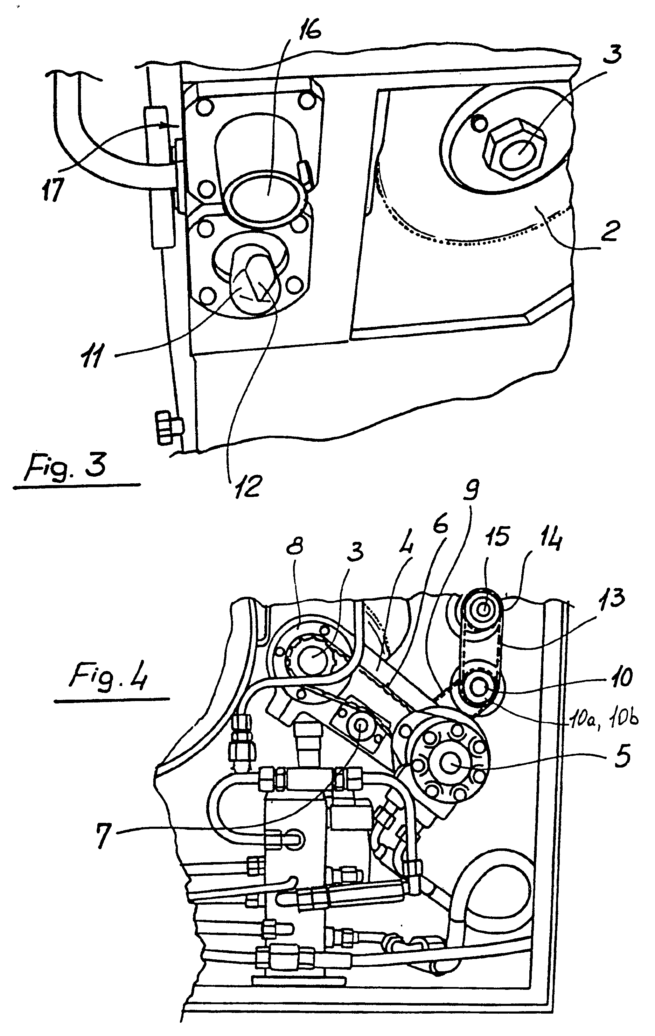

The said annular structure is carried by three equiangularly spaced rollers 26, and is capable of being rotated about its axis by the action of a motor 27, preferably of hydraulic type, which drives a sprocket 28 which engages with a toothed ring (not shown) the teeth of which lie in a circle corresponding to the inner perimetral line of the annular structure itself. The rotation of this annular structure 18 is controlled by a proximity limit switch 29 the control members 30 of which are mounted on the said rear ring 22 and the front flange 20. The presence of the said control members 30 makes it possible for the annular structure to be rotated to bring an appropriate punch and die into position in register with a frontal aperture 31 of a working station provided with an appropriate support recess 32 on which the end of a tube to be clinched to a collar by the apparatus is positioned in use of the machine. For control of this movement there is provided a control panel 33 (Figure 1) having a selector by means of which the operator can pre-select the desired tool to be brought into register with the support 31 in dependence on the size of the tube to be fitted with connectors.

The cutting tool constituted by the circular saw blade 2 is provided with a hydraulically controlled jaw 34 for clamping the tubes to be cut against a locator member 35, and a protective cowling 36 which covers a slot 38 through which the saw blade projects.

In use, after having cut the tube to the desired length, the operator cleans it up by means of the rotating de-burring tools 11 and 16 and, possibly, bends it in dependence on the requirements of use. Subsequently, after having fitted the connection nut and the retaining ring or clinch ring onto the tube itself the operator subjects this latter to clinching by means of the selected punch and die of the appropriate size. Electronic control of the clinching pressures is provided so that all the clich rings, on tubes of the same diameter, are pressed with the same force.

As mentioned above, the connectors in question can be clinched also to the ends of suitably pre-arranged flexible tubes.

## Claims

1. A multifunctional machine for fitting connectors onto tubes for hydraulic systems, characterized in that it comprises a support frame (17) carrying tube cutting means (2), tube end cleaning means (11, 16) for the internal and external de-burring of the cut end of a tube, and clinching means including a plurality of punches (25) of different sizes corresponding to the possible diameters of the tubes to be fitted, the punches being perimetrically mounted on an annular structure (18) rotatable about its axis under the control of preselector means (33) to bring a selected punch (25) into position at a working station for clinching a connector to the end of a tube, and in that the said machine includes an annular clinching structure (18) with a horizontal axis, which is constituted by a short straight cylinder (19) provided with a front flange (20) having a plurality of radially outwardly facing cavities (21) functioning as dies, a rear ring (22) being fixed to the perimeter of the said straight cylinder and carrying, on blocks (23) biased by pairs of coil springs (24), corresponding punches (25) having diameters corresponding to the dimensions of the facing cavities (21) in the front flange (20).

2. A multifunctional machine for the assembly of connectors onto tubes for hydraulic systems, according to Claim 1, characterized in that the said tube cutter means (2) is constituted by a circular saw (2) mounted on a shaft (3) borne at one end of a lever arm (4) which is pivoted about an axis coincident with the shaft (5) of a motor which also drives a pair of toothed pulleys one of which drives a belt (6) held under tension by a tensioner pulley (7) carried on the said lever arm (4) and driving a pulley (8) keyed on the shaft (3) carrying the circular saw (2), the said tube cutter further being provided with a hydraulically controlled jaw (34) for clamping the tube to be cut against a locator (35).

3. A multifunctional machine for the assembly of connectors onto tubes for hydraulic systems, according to Claim 2, characterized in that the second of said pair of pulleys drives a further belt (9) for driving a spindle (10) carrying a de-burring tool (11) having a frusto-conical form and means for de-burring the inner edge of the cut end of the tube by means of longitudinal cutting discontinuities (12) ; the said spindle (10) further carrying a second pulley (10b) which, by means of a further toothed belt (13) drives a corresponding pulley (14) mounted on a second spindle (15) carrying a further de-burring tool (16) constituted by a cylindrical element provided with a coaxial cavity of frusto-conical form operable to de-burr the outer edge of the cut end of the tube.

4. A multifunctional machine for the assembly of connectors onto tubes for hydraulic systems, according to any preceding Claim, characterized in that tube bending apparatus is fitted on one side of the support frame (17) whereby to allow cleaned tubes to be bent to a desired radius of curvature.

5. A multifunctional machine for the assembly of connectors onto tubes for hydraulic systems, according to claim 1, characterized in that the said annular structure (18) is carried by three rollers (26) and can be rotated about its axis by the action of a motor (27) which drives a sprocket (28) which engages a toothed ring coaxial with the annular structure (18).

6. A multifunctional machine for the assembly of connectors onto tubes for hydraulic systems, according to Claim 5, characterized in that the rotation of said annular structure (18) is controlled by a proximity limit switch (29) having control members (30) mounted on said rear ring (23) and on the above-mentioned front flange (20) of the annular structure (18).

7. A multifunctional machine for the assembly of connectors onto tubes for hydraulic systems, according to any preceding Claims, characterized in that it includes a device for the electronic control of the clinching pressures, capable of ensuring that, for the same tube diameter, all clinch rings are pressed with the same force.

**Ansprüche**

1. Multifunktionelle Maschine zum Anbringen von Verbindungsstücke an Rohren für hydraulische Systeme, dadurch gekennzeichnet, daß sie ein Untergestell (17) zum Tragen von Rohrschneidemitteln (2), Mittel (11, 16) zum Schleifen der inneren und äußeren Abgraten der geschneideten Rohrende, und Nietmittel mit mehreren Durchschläge (25), die verschieden gemessen sind und der möglichen zuverbindenden Durchmessern entsprechen, aufweist, wobei diese Durchschläge auf eine ringförmige Struktur (18) umfangsangeordnet sind und diese Struktur drehbar um ihren Achse unter Kontrolle von Vorwahlmittel (33) zur Einstellung eines gewählten Durchschlag (25) in einer Arbeitsstation zum Nieten eines Verbindungsstück auf ein Rohrende angeordnet ist, und daß diese Maschine eine horizontalachsige ringförmige Nietstruktur (18) einschließt, die aus einem gerades Kurzzylinder (19) besteht, das mit einem Vorderflansch (20) vorgesehen ist, der mehreren als Führung tätigen äußengewendeten Aufnahmen (21) verseht, wobei ein Hinterring (22) am obigen Geradezylinderumfang angebracht ist und auf aus Paare von Spiralfedern (24) angepreßten Blocke (23) trägt, wobei die entsprechenden Durchschläge (25) mit Durchmessern, die als den Vorderaufnahmen (21) in der Vorderflansch (20) entsprechend gemesst sind.

2. Multifunktionelle Maschine zum Anbringen von Verbindungsstücke an Rohren für hydraulische Systeme, nach Anspruch 1, dadurch gekennzeichnet, daß die obengenannte Rohrschneideeinheit aus eine Kreissäge (2) besteht, die an einer auf ein ende eines Hebelarmes (4) getragenen Spindel (3) angebracht ist, wobei dieser Hebelarm (4) um einen mit der Welle (5) eines Motors, der auch ein Paar Zahnscheiben betriebt, entsprechende Achse drehabgebolzen ist, und eine der obigen Zahnscheibe einen Riemen (6) betriebt, der aus einer auf den obige Hebelarm (4) getragenen Spannriemenscheibe (7) gespannt wird, die eine auf die die Kreissäge (2) tragende Spindel (3) gekeilte Riemenscheibe (8) betriebt, wobei dieser Rohrschneider, außerdem, mit eine hydraulisch gesteuerte Backe (34) zum Klemmen des zuschneidenden Rohres gegen einer Einstellungseinrichtung (35) vorgesehen ist.

3. Multifunktionelle Maschine zum Anbringen von Verbindungstücke an Rohren für hydraulische Systeme, nach Anspruch 2, dadurch gekennzeichnet, daß die zweite Riemenscheibe des obigen Paares, zum Steuern einer spindel (10) einen andere Riemen (9) betriebt, wobei diese Spindel ein kegelstumpfförmige Werkzeug (11) zum Abgraten der inneren Kante des geschneideten Rohrendes durch scharfe Längssprunge (10) und, ferner, eine zweite Riemenscheibe (10b), die durch einen andere Zahnriemen (13) eine auf eine zweite Spindel (15) angebrachte entsprechende Riemenscheibe (14) betriebt, trägt, wobei diese zweite Spindel ein andere Abgratewerkzeug (16) trägt, das aus einem zylindrischen Element besteht, das einen zum Abgraten der äußeren Kante des geschneideten Rohrendes betriebbare kegelstumpfförmige koaxiale Hohlraum aufweist.

4. Multifunktionelle Maschine zum Anbringen von Verbindungsstücke an Rohren für hydraulische Systeme, nach jeden vorhergehenden Ansprüchen, dadurch gekennzeichnet, daß auf eine Seite des Untergestelles (17) einen Rohrbieger angeordnet ist, um so den geschliffenen Rohren bis zum gewünschten Biegeradius biegen zu ermöglichen.

5. Multifunktionelle Maschine zum Anbringen von Vervindungsstücke an Rohren für hydraulische Systeme, nach Anspruch 1, dadurch gekennzeichnet, daß die obige ringförmige Struktur (18) auf drei Rollen (26) getragen und durch einen Motor (27) um ihren Achse gedrehen wird, wobei dieser Motor ein den Zahnring koaxial der ringförmigen Struktur (18) einklinkende Ritzel steuert.

6. Multifunktionelle Maschine zum Anbringen von Verbindungsstücke an Rohren für hydraulische Systeme, nach Anspruch 5, dadurch gekennzeichnet, daß die Drehung der obigen ringförmigen Struktur (18) aus einen Annäherungsschalter (29) gesteuert wird, der auf den obengenannte Hinterring (23) und auf den Vorderflansch (20) der Ringstruktur (18) angebrachten Kontrollmittel (30) verseht.

7. Multifunktionelle Maschine zum Anbringen von Verbindungsstücke an Rohren für hydraulische Systeme, nach Anspruch 1, dadurch gekennzeichnet, daß sie zur Überwachung der Nietdrucke eine Vorrichtung einschließt, die für denselben Durchmesser einen gleichkräftige Druck versichern kann.

## Revendications

1. Machine multifonctionnelle pour monter des connecteurs sur des tubes pour systèmes hydrauliques, caractérisée en ce qu'elle comprend un bâti de support (17) portant moyens (2) pour couper les tubes, moyens (11, 16) pour polir l'extrémité coupée du tube des ébarbures intérieures et extérieures et moyens de rivure comprenant une série de poinçons (25) ayant mesures différentes et correspondant aux diamètres possibles des tubes à être insérés, lesdits poinçons étant montés périmétralement sur une structure annulaire (18) pivotante autour de son axe sous le contrôle de moyens (33) présélecteurs pour porter un poinçon (25) choisi en position dans une poste de travail pour riveter un connecteur sur une extrémité d'un tube, et en ce que ladite machine présente une structure annulaire (18) de rivure à axe horizontal, formée par un cylindre (19) droit et court, pourvu d'une bride antérieure (20) munie d'une série d'évidements (21) tournés à l'extérieur et opérant comme guide, un anneau postérieur (22) étant fixé au périmètre dudit cylindre droit et portant, sur blocs (23) pressés par pairs de ressorts à spirale (24) poinçons (25) correspondants ayant un diamètre correspondant aux dimensions des évidements tournés à l'extérieur (21) dans la bride antérieure (20).

2. Machine multifonctionnelle pour monter des connecteurs sur des tubes pour systèmes hydrauliques, selon la revendication 1, caractérisée en ce que lesdits moyens (2) de coupe des tubes est constitué par une scie circulaire (2) montée sur un arbre (3) porté à l'une extrémité d'un bras de levier (4) pivoté autour d'un axe coïncident avec l'arbre (5) d'un moteur commandant aussi un pair de poulies dentées, l'une desquelles commande une courroie (6) tenue sous tension par une poulie (7) de tension portée sur ledit bras de levier (4) et commandant une poulie (8) clavetée sur l'arbre (3) portant la scie circulaire (2), ledit coupe-tubes étant muni en outre d'une griffe (34) contrôlée hydrauliquement pour serrer le tube à être coupé contre un positionneur (35).

3. Machine multifonctionnelle pour monter des connecteurs sur des tubes pour système hydrauliques, selon la revendication 2, caractérisée en ce que la deuxième dudit pair de poulies commande une courroie (9) ultérieure pour commander un fuseau (10) portant un outil (11) à ébarber présentant une forme à tronc de cône et moyens pour éliminer les ébarbures du bord intérieur de l'extrémité coupée du tube au moyens de discontinuités tranchantes longitudinales (12) ; ledit fuseau (10) portant en outre une deuxième poulie (10b) qui, au moyen d'une courroie dentée ultérieure (13) commande une poulie (14) correspondente montée sur un deuxième fuseau (15) portant un outil à ébarber ultérieur (16) formé par un élément cylindrique présentant un évidement coaxial ayant une forme de tronc de cône opérable pour couper les ébarbures du bord extérieur de l'extrémité coupée du tube.

4. Machine multifonctionnelle pour monter des connecteurs sur des tubes pour systèmes hydrauliques, selon n'importe quelle revendication, caractérisée en ce que sur un côté du bâti de support (17) il y a arrangé un dispositif pour courber les tubes, ainsi de permettre que les tubes polis soyent courbés jusqu'au rayon de courbure désiré.

5. Machine multifonctionnelle pour monter des connecteurs sur des tubes pour systèmes hydrauliques, selon la revendication 1, caractérisée en ce que ladite structure annulaire (18) est portée sur trois rouleaux (26) et peut être tournée autour de son axe par action d'un moteur (27) qui commande un rochet (28) engageant un anneau denté avec la structure annulaire (18).

6. Machine multifonctionnelle pour monter des connecteurs sur des tubes pour systèmes hydrauliques, selon la revendication 5, caractérisée en ce que la rotation de ladite structure annulaire (18) est commandée par un interrupteur d'approximation (29) présentant moyens de contrôle (30) montés sur ledit anneau postérieur (23) et sur ladite bride antérieure (20) de la structure annulaire (18).

7. Machine multifonctionnelle pour monter des connecteurs sur des tubes pour systèmes hydrauliques, selon n'importe quelle revendication précédente, caractérisée en ce qu' elle comprend un dispositif pour le contrôle électronique des pressions de rivure, en état d'assurer que, pour le même diamètre de tube, tous les anneaux de rivure sont pressés par la même force.

_Fig. 1_

_Fig. 2_

6

16

3

17

2

11

12

_Fig. 3_

8   3   4   6   9   15   14

13

_Fig.4_

10

10a, 10b

5

7

_Fig. 5_

24    23    25

32    31

_Fig. 6_

32    25

26    24    23    18

30

26    22

27    19

26    20

21

Fig.7